# EUROPÄISCHE PATENTSCHRIFT

(11) **EP 3 559 872 B1**
(45) Veröffentlichungstag und Bekanntmachung des Hinweises auf die Patenterteilung: **04.06.2025**
(21) Anmeldenummer: 16826336.6
(22) Anmeldetag: 22.12.2016
(51) Int. Cl.: G06Q 50/43

(54) **VORRICHTUNG, COMPUTERPROGRAMMPRODUKT, SIGNALFOLGE, FORTBEWEGUNGSMITTEL UND VERFAHREN ZUR UNTERSTÜTZUNG EINES ANWENDERS BEI DER FINDUNG EINES GEEIGNETEN MITFAHRERS**
APPARATUS, COMPUTER PROGRAM PRODUCT, SIGNAL SEQUENCE, MEANS OF TRANSPORT AND METHOD FOR ASSISTING A USER IN FINDING A SUITABLE FELLOW PASSENGER
DISPOSITIF, PRODUIT-PROGRAMME D'ORDINATEUR, SÉQUENCE DE SIGNAUX, MOYEN DE TRANSPORT ET PROCÉDÉ D'ASSISTANCE D'UN UTILISATEUR POUR TROUVER UN PASSAGER APPROPRIÉ

(43) Veröffentlichungstag der Anmeldung: 30.10.2019
(73) Patentinhaber: Volkswagen Aktiengesellschaft, 38440 Wolfsburg (DE)
(72) Erfinder: KASSNER, Astrid, 10117 Berlin (DE); ROZADA, Joel, 411 34 Göteborg (SE); ANDRESEN, Fredrik, 428 31 Kållered (SE)
(86) Internationale Anmeldenummer: PCT/EP2016/082389
(87) Internationale Veröffentlichungsnummer: WO 2018/113976

(56) Entgegenhaltungen:
- DE-A1- 102012 218 507
- WU YUN HUI ET AL: "Peer-to-Peer Shared Ride Systems", 1 October 2006, NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 252 - 270, ISBN: 978-3-642-16984-7, ISSN: 0302-9743, XP047397348

## Beschreibung

Die vorliegende Erfindung betrifft eine Vorrichtung, ein Computerprogrammprodukt, eine Signalfolge, ein Fortbewegungsmittel und ein Verfahren zur Unterstützung eines Anwenders eines Fortbewegungsmittels bei der Findung eines geeigneten Mitfahrers. Insbesondere betrifft die vorliegende Erfindung eine Vermeidung unnötigen Datenverkehrs und unnötiger Anwenderinteraktionen.

DE 10 2012 218 507 A1 zeigt eine Architektur eines Mitfahrdienstes, bei welchem eine Logik auf einem Computerprozessor in einem Fahrzeug angeordnet ist. Das Verfahren umfasst das Bestimmen einer Route für einen Fahrer des Fahrzeugs und das Zugreifen auf Benutzervorlieben des Fahrers, wobei die Benutzervorlieben Eigenschaften eines Mitfahrereignisses und von voraussichtlichen Mitfahrpersonen umfassen. Das Verfahren umfasst auch das Vergleichen von Benutzervorlieben mit Informationen, die von Personen bereitgestellt werden, die Beförderung suchen, wobei jede der Personen eine Anforderung für die Beförderung liefert. Die Logik sorgt ferner für ein Identifizieren von qualifizierten Kandidaten für das Mitfahrereignis aus dem Vergleich durch Bestimmen eines Schwellenniveaus von Eigenschaften, die Informationen entsprechen, die von den Personen bereitgestellt werden. Im Ansprechen auf das Empfangen einer Auswahl eines qualifizierten Kandidaten aus den qualifizierten Kandidaten durch den Fahrer umfasst das Verfahren das Übertragen einer Kommunikation zum ausgewählten qualifizierten Kandidaten, die die Anforderung annimmt. XP047397348 zeigt ein Peer-to-Peer-Shared-Ride-System, welches es ermöglicht, ad-hoc Fahrten zu finden, indem Nutzer direkt mit nahegelegenen Hosts über funkbasierte Kommunikation verhandeln.

Seit einiger Zeit sind online angebotene Fahrdienste wie Uber und Gett sehr populär und bieten vielen Nutzern dieser Dienste transparente Informationen über den Fahrer, den Preis und die Verfügbarkeit (z. B. wo befindet sich der Fahrer, wie wurde er bewertet, wann ist er vor Ort etc.). Aufgrund der Tatsache, dass Fahrdienste sich im Wesentlichen an der Wunschroute des Fahrgastes orientieren, wie dies bei herkömmlichen Taxifahrten der Fall ist, besteht Optimierungspotenzial hinsichtlich der Ökonomie und Ökologie entsprechender Fahrdienste.

Es ist eine Aufgabe der vorliegenden Erfindung, den vorstehend identifizierten Bedarf zu stillen.

Die vorstehend identifizierte Aufgabe wird erfindungsgemäß mittels eines Verfahrens zur Unterstützung eines Anwenders eines Fortbewegungsmittels bei der Findung eines geeigneten Mitfahrers gelöst. Der Anwender kann der Fahrer oder zumindest ein Insasse des Fortbewegungsmittels sein. Der Mitfahrer kann ein dem Anwender bekannter oder bislang unbekannter Interessent sein. In einem ersten Schritt wird eine Mitfahranfrage des Mitfahrers bzw. potenziellen Mitfahrers durch den Anwender bzw. das Fortbewegungsmittel des Anwenders bzw. ein Kommunikationsendgerät des Anwenders empfangen. Die Mitfahranfrage umfasst eine Definition einer Startposition und einer Zielposition einer Wunschroute des Mitfahrers. Die Mitfahranfrage muss jedoch nicht durch den Anwender oder das Fortbewegungsmittel unmittelbar empfangen werden. Sie kann auch zunächst über einen stationären Server empfangen werden, auf welchem sie zunächst gefiltert wird. Beispielsweise kann die Mitfahranfrage anhand vordefinierter Referenzen, welche die potenziellen Anbieter von Mitfahrgelegenheiten bzw. Anwender von Fortbewegungsmitteln auf dem Server definiert haben, gefiltert werden. In einem zweiten Schritt wird die Mitfahranfrage mit einer vordefinierten oder prädizierten Route des Fortbewegungsmittels automatisch abgeglichen. Dieser Schritt kann auf dem stationären Server, auf einem Anwenderendgerät des Anwenders oder auf einer Auswerteeinheit des Fortbewegungsmittels des Anwenders erfolgen. Mit anderen Worten ist die Reihenfolge des Empfangens der Mitfahranfrage und des automatischen Abgleichens der Mitfahranfrage umkehrbar. Sofern das Abgleichen auf einem stationären Server erfolgt, kann die Mitfahranfrage dann und nur dann an den Anwender weitergeleitet werden, wenn vordefinierte Referenzen auf die Mitfahranfrage zutreffen, welche der Anwender definiert hat, um eine Mitfahranfrage als "interessant" zu kategorisieren. Sofern die Referenzen die Mitfahranfrage als für den Anwender uninteressant kategorisieren, kann der Datenkommunikationsbedarf ("Traffic") zur Übermittlung der Mitfahranfrage an den Anwender/das Fortbewegungsmittel erübrigt werden. Sofern die Mitfahranfrage in jedem Fall an den Anwender, sein Kommunikationsendgerät bzw. sein Fortbewegungsmittel weitergeleitet und dort ausgewertet wird, ist stets sichergestellt, dass stets die aktuellsten, im Fortbewegungsmittel gespeicherten Referenzen für den Abgleich der Mitfahranfrage mit der vordefinierten oder prädizierten Route des Fortbewegungsmittels verwendet werden. In Abhängigkeit eines Ergebnisses des Abgleiches wird schließlich automatisch anhand einer vorliegenden Referenz entschieden, ob die Mitfahranfrage dem Anwender unterbreitet wird oder nicht. Mit anderen Worten können der Server, das Fortbewegungsmittel oder das Kommunikationsendgerät des Anwenders darüber entscheiden, ob der Anwender mit der Mitfahranfrage überhaupt behelligt wird. Auf diese Weise kann die Akzeptanz eines erfindungsgemäßen Verfahrens für Anwender von Fortbewegungsmitteln erhöht werden und somit die Anzahl teilnehmender Anwender und Mitfahrer erhöht werden.

Die Unteransprüche zeigen bevorzugte Weiterbildungen der Erfindung.

Die vordefinierte Referenz kann beispielsweise eine Definition eines maximal vom Anwender akzeptierten Umweges umfassen. Mit anderen Worten kann automatisch ermittelt werden, welche Wegstrecke, welche zusätzliche Reisezeit u. ä. der Anwender zur Mitnahme des Mitfahrers aufwenden muss. Diese Aufwendungen können beispielsweise ins Verhältnis mit einer vom potenziellen Mitfahrer zu zahlenden Kostenbeteiligung definiert sein. Mit anderen Worten kann beispielswiese der Umweg ins Verhältnis zu einem Gesamtweg von der Startposition zur Zielposition gesetzt werden. Sofern die vordefinierte Referenz zusätzliche Ausschlusskriterien definiert (z. B. Auslassen von Mautstraßen, Fährverbindungen, Schlechtwegstrecken o. ä.), können auch diese Umstände beim automatischen Abgleichen der Mitfahranfrage mit der vordefinierten Route berücksichtigt werden.

Der Umweg des Anwenders, welchen er aufgrund einer potenziellen Mitnahme des Mitfahrers auf sich zu nehmen hat, setzt sich zusammen aus dem Umweg, welchen er aufgrund der Startposition gegenüber seiner vordefinierten/prädizierten Route zu fahren hat und dem Umweg, welchen er aufgrund der Zielposition bezüglich seiner vordefinierten/prädizierten Route zu fahren hat. Beide Umwege werden zu unterschiedlichen Zeiten gefahren und können daher unterschiedliche Einflüsse auf die Gesamtreisezeit und/oder die Gesamtreisekosten haben. Beispielsweise kann es sinnvoll sein, eine zwischen der Startposition und der Zielposition liegende Wegstrecke (z. B. eine Autobahnfahrt) möglichst frühzeitig zu durchfahren, da mit der Zeit eine Zunahme der Verkehrsdichte zu erwarten ist. Entsprechend kann auch eine Abnahme der Verkehrsdichte mit der Zeit zu erwarten sein. So kann eine unterschiedliche Bewertung des Umweges aufgrund der Startposition bzw. aufgrund der Zielposition bezüglich der vordefinierten Route sinnvoll sein. Insbesondere für den Fall, dass die Verkehrsentwicklung über der Zeit, die Transportmöglichkeiten bzw. Befahrbarkeit von Teilstrecken (Fährverbindungen, Mautstraßen, Nachtfahrverbote o. ä.) berücksichtigt werden, eine unterschiedliche Bewertung des Weges aufgrund der Startposition gegenüber einem Umweg aufgrund der Zielposition sinnvoll sein.

Bevorzugt kann im Ansprechen auf das Ermitteln einer Annahme der Mitfahranfrage durch den Anwender oder automatisch durch das Anwenderendgerät/ Fortbewegungsmittel des Anwenders eine Routenberechnung von einer aktuellen Position des Fortbewegungsmittels zur Startposition (z. B. unter Zugrundelegung aktueller Verkehrsverhältnisse) gestartet werden. Zumindest kann eine Strecke bzw. können unterschiedliche Strecken, eine Zeit bis zur Ankunft an der Startposition o. ä. errechnet werden. Optional kann die Routenführung angeboten oder sogar automatisch gestartet werden. Auf diese Weise erübrigt sich für den Anwender eine Interaktion zur Veranlassung einer Routenberechnung/-führung.

Die Referenz, mittels welcher der Anwender die Mitfahranfrage abgleichen/bewerten lässt, bevor ihm ein entsprechender Hinweis ergeht, kann in Abhängigkeit unterschiedlicher Parameter definiert sein. Beispielsweise kann die Länge der vordefinierten Route (wie oben beschrieben) berücksichtigt werden, indem beispielsweise die Länge des Umweges bzw. die zu erwartende Kostenbeteiligung durch den Mitfahrer ins Verhältnis zur Länge der ohnehin geplanten Route gesetzt wird. Alternativ oder zusätzlich kann ein kalendarisches Datum (z. B. ein Wochentag, ein Feiertag, ein Wochenendtag) und alternativ oder zusätzlich eine Tageszeit bzw. ein Tageszeitraum darüber entscheiden, ob der Fahrer bereit ist, den Umweg zur Aufnahme bzw. Ablieferung des Mitfahrers auf sich zu nehmen. Beispielsweise kann der Fahrer an einem Werktag eine Minderbereitschaft zur Inkaufnahme von Umwegen als an Wochenenden/Feiertagen aufweisen. Zudem kann automatisch eine Besetzung des Fortbewegungsmittels (wie viele Mitfahrer hat der Fahrer bereits?) darüber entscheiden, wie es um die Bereitschaft des Fahrers zur Inkaufnahme von Umwegen steht. Optional kann auch eine aktuelle Konfiguration des Fortbewegungsmittels (z. B. Anhängerbetrieb, Dachbox montiert o. ä.) mitunter automatisch erkannt und als Parameter der Referenz definiert sein. Sofern ein Fortbewegungsmittel bzw. ein Account eines Systems/einer App für die Unterbreitung von Mitfahranfragen infrage kommen, kann ein jeder möglicher Anwender (z. B. der Halter des Fortbewegungsmittels und sein Ehepartner) unterschiedliche Referenzen definieren. Die Identität des Anwenders kann beispielsweise sensorisch (z. B. anhand eines Funkschlüssels, anhand eines mitgeführten Anwenderendgerätes o. ä.) festgestellt und für das Abgleichen und Entscheiden über die Mitfahranfrage verwendet werden.

Der Anwender kann weiter unterstützt werden, indem im Ansprechen auf das automatische Ermitteln einer Ankunft an der Startposition eine Routenberechnung von der Startposition zur Zielposition gestartet wird. Mit anderen Worten kann bereits durch die Ankunft an einer Startposition das Akzeptieren der Mitfahranfrage durch den Anwender erfolgen. Um dem Anwender die Eingabe eines Navigationsziels (Zielposition) zu ersparen, kann die mit der Mitfahranfrage erhaltene Zielposition als neues Routenziel definiert und eine Routenführung zur Zielposition (gegebenenfalls nach vorheriger Bestätigung durch den Anwender) gestartet werden.

In entsprechender Weise kann bei einem automatischen Ermitteln einer Ankunft des Fortbewegungsmittels an der Zielposition eine automatische Routenberechnung zur Fortsetzung der vordefinierten/prädizierten Route, welche der Anwender unabhängig von der Mitfahranfrage zu fahren gedachte, gestartet werden. Mit anderen Worten wird der Anwender auf dem schnellsten Weg zu der vordefinierten Route zurückgeführt, nachdem er den Mitfahrer an der Zielposition abgesetzt hat.

Beispielsweise kann die Mitfahranfrage weiter einen Wunsch-Zeitpunkt zur Abfahrt an der Startposition und/oder eine Kategorisierung der Person des Mitfahrers umfassen. Der Wunsch-Zeitpunkt zur Abfahrt an der Startposition kann beispielsweise weniger wichtig (± drei Stunden) oder wichtig (± 15 Minuten) definiert sein. Entsprechend kann die Referenz darüber entscheiden, wie es um die Bereitschaft des Anwenders steht, seine vordefinierte Route etwas früher oder etwas später zu bereisen. Bekanntermaßen können Kategorien der Person des Mitfahrers (männlich/weiblich, Raucher/Nichtraucher, Tierhalter o. ä.) darüber entscheiden, ob die Mitfahranfrage dem Anwender unterbreitet wird oder nicht.

Gemäß einem zweiten Aspekt der vorliegenden Erfindung wird eine Vorrichtung zur Unterstützung eines Anwenders eines Fortbewegungsmittels bei der Findung eines geeigneten Mitfahrers vorgeschlagen. Die Vorrichtung umfasst einen Dateneingang (z. B. eine Antenne, ein Busteilnehmer o. ä.), mittels dessen Mitfahranfragen und gegebenenfalls Positionsinformationen des Fortbewegungsmittels/des Anwenders/des potenziellen Mitfahrers ermittelt werden können. Eine Auswerteeinheit (z. B. ein programmierbarer Prozess, ein elektronisches Steuergerät o. ä.) ist vorgesehen, mittels des Dateneingangs eine Mitfahranfrage zu empfangen, welche eine Definition einer Wunsch-Startposition und einer Wunsch-Zielposition umfasst.

Die Mitfahranfrage kann zusätzlich einen Wunsch-Zeitpunkt für den Start an der Startposition und/oder eine Kategorisierung des anfragenden potenziellen Mitfahrers umfassen. Die Auswerteeinheit ist eingerichtet, die Mitfahranfrage automatisch mit einer vordefinierten oder prädizierten Route des Fortbewegungsmittels abzugleichen und in Abhängigkeit eines Ergebnisses des Abgleiches automatisch anhand einer vordefinierten Referenz zu entscheiden, ob dem Anwender die Mitfahranfrage unterbreitet wird oder nicht. Mit anderen Worten kann vermieden werden, dass der Anwender mit für ihn uninteressanten Mitfahranfragen konfrontiert wird. Mit anderen Worten ist die erfindungsgemäße Vorrichtung eingerichtet, die Merkmale, Merkmalskombinationen und die sich aus diesen ergebenden Vorteile des erfindungsgemäßen Verfahrens derart ersichtlich in entsprechender Weise zu verwirklichen, dass zur Vermeidung von Wiederholungen auf die obigen Ausführungen verwiesen wird.

Gemäß einem dritten Aspekt der vorliegenden Erfindung wird ein Computerprogrammprodukt vorgeschlagen, welches Instruktionen umfasst, welche, wenn sie auf einer programmierbaren Auswerteeinheit einer Vorrichtung gemäß dem zweitgenannten Erfindungsaspekt ausgeführt werden, die Auswerteeinheit veranlassen, die Schritte eines Verfahrens gemäß dem erstgenannten Erfindungsaspekt auszuführen. Das Computerprogrammprodukt kann beispielsweise als Datenspeicher, insbesondere als CD, DVD, Blue Ray-Disc, Flash-Speicher, RAM/ROM o. ä. ausgestaltet sein.

Gemäß einem vierten Aspekt der vorliegenden Erfindung wird eine Signalfolge repräsentierend Instruktionen vorgeschlagen, welche, wenn sie auf einer programmierbaren Auswerteeinheit einer Vorrichtung gemäß dem zweitgenannten Erfindungsaspekt ausgeführt werden, die Auswerteeinheit veranlassen, die Schritte eines Verfahrens gemäß dem erstgenannten Erfindungsaspekt auszuführen. Die Signalfolge stellt den Kerngedanken der vorliegenden Erfindung auch für den Fall unter Schutz, dass sich die zur Ausführung der Verfahrensschritte erforderlichen Instruktionen auf einem Datenspeicher außerhalb des Geltungsbereiches der vorliegenden Ansprüche befinden.

Gemäß einem fünften Aspekte der vorliegenden Erfindung wird ein Fortbewegungsmittel (z. B. ein Pkw, Transporter, Lkw, Motorrad, Luft- und/oder Wasserfahrzeug) vorgeschlagen, welches eine Vorrichtung gemäß dem zweitgenannten Erfindungsaspekt aufweist. Die Vorrichtung kann insbesondere fest im Fortbewegungsmittel verbaut sein. Mit anderen Worten kann sie dauerhaft in das Energie- und/oder Informationsbordnetz des Fortbewegungsmittels integriert sein. Insbesondere kann sie Hardware-Komponenten mit einer On-Board-Navigation gemeinsam verwenden. Auch bezüglich des Fortbewegungsmittels wird hinsichtlich der Merkmale, Merkmalskombinationen und Vorteile auf die obigen Ausführungen verweisen.

Nachfolgend werden Aspekte der vorliegenden Erfindung in anschaulichen Kombinationen genannt, ohne einschränkenden Charakter zu haben.

Für ein erfindungsgemäßes Fahrzeug-Infotainment-System wird die eine dynamische Fahrdienstintegration vorgeschlagen. In einer gesonderten Abfrage wird die Bereitschaft des Fahrers abgefragt, ob er und wie oft er gegebenenfalls Anfragen erhalten möchte, weitere Personen zu einem Ziel in seiner Nähe oder an seiner Route zu vorab bestimmten Konditionen mitzunehmen. In einer Ausgestaltung der Erfindung erkennt das System anhand der Annahmen und Ablehnungen, an welchen Tagen, zu welchen Uhrzeiten und bei welchen Routen beim Fahrer die Bereitschaft zur Mitnahme weiterer Personen vorliegt. Es ist auch denkbar, dass der Fahrer mit manuellen Voreinstellungen die entsprechenden Parameter auswählt.

Das Fahrzeug-Infotainment-System ist mit dem Portal eines Fahrzeugherstellers (oder einem Betreiber) eines Mitfahrdienstes verbunden. Das Portal kennt somit den Ort aller verbundenen/registrierten Fahrzeuge. Ist ein Ziel für ein Navigationssystem eingegeben worden oder ein wahrscheinliches Reiseziel in Verbindung mit einer aktuellen Position bekannt, wird dieses an das Portal übertragen. Alternativ werden die Daten eines prädiktiven Navigationssystems bereitgestellt. Die prädiktive Navigation kann dabei auch im Backend ablaufen. Gegebenenfalls kann dies für den Kunden als optionaler (Bezahl)-Dienst angeboten werden.

Ein transportbedürftiger zweiter Anwender/Mitfahrer stellt nun eine Anfrage an den Transportdienst (Portal), dass er von einem Ort X zu einem Ort Y gelangen möchte (gegebenenfalls jetzt oder zu einem vordefinierten späteren Zeitpunkt). Das Portal sucht nun Fahrer und Fahrzeuge, die sich in dem Gebiet (online) befinden, bereit sind, Fahrdienste zu übernehmen und deren Voreinstellungen mit der Anfrage zu vereinbaren sind.

Beispielsweise kann ein Nutzer angeben, wie oft und wann er Fahrdienste anbietet und welchen Umweg und/oder welche Zeitverzögerung er dabei in Kauf zu nehmen bereit ist. Finden sich keine Fahrer, die bereit sind, den Fahrdienst zu übernehmen, geht eine entsprechende Information an den Anfragenden zurück und/oder die Anfrage wird an einen weiteren Dienst vermittelt (gegebenenfalls über eine Provision), z. B. Uber-/Gett-Dienst; Taxizentrale o. ä. weitergeleitet.

Ein Fahrer/Anwender befindet sich beispielsweise auf einer Route zu einem eigenen Ziel A (vordefinierte Route). Dem Infotainment-System sind über die Fahrzeugsensoren bzw. die Dateneingabe über den Fahrer das Ziel (gegebenenfalls Daten aus prädiktiver Navigation) und die Anzahl weiterer Personen im Fahrzeug (sensorisch ermittelt) bekannt. Weiterhin können zusätzliche Daten aus dem Terminkalender des Fahrers und/oder der weiteren Fahrzeuginsassen bekannt sein.

Beispielsweise kann der Fahrer voreingestellt haben, dass er lediglich dann transportbereit ist, wenn er sich alleine im Fahrzeug befindet, der Umweg kleiner als zehn Kilometer oder die Umwegzeit kleiner als 30 Minuten, eine Mindeststrecke von 10 km durch den Mitfahrer angefragt worden, ein Zeitfenster zwischen 07:00 Uhr und 20:00 Uhr werktags nicht überschritten und er nicht auf dem Weg zu einem Ziel XYZ ist. Sofern ein Termin (z. B. aus einem persönlichen Terminkalender des Anwenders ermittelt) vordefiniert ist, kann er eine Mindestzeit (z. B. drei Minuten) definieren, um welche die neue Ankunftszeit am Austragungsort vor dem Beginn des Termins liegt. Sofern keine Präferenz des Anwenders verletzt ist, erhält er nun im Infotainment-System eine Anfrage, ob aktuell tatsächlich Bereitschaft zur Mitnahme von Passagieren besteht. Bestätigt der Fahrer die Anfrage, so erhält er im nächsten Schritt die Anfrage, ob er einen Transport einer Person von einem Standort X nach Y übernehmen möchte. Zusätzlich können angezeigt werden:
1. Abholort des Passagiers, Zielort des Passagiers
2. Foto des Passagiers und dessen Bewertung aus bisherigen Fahrten
3. Umweg: x Kilometer, voraussichtliche Zeitverzögerung
4. Ankunftszeit am Standort X
5. Ankunftszeit am Standort Y
6. Fahrbeteiligungspreis in Euro
7. Möchten Sie die Fahrt annehmen? Ja/Nein.

Nimmt der Fahrer die Fahrt verbindlich an, werden die entsprechenden Daten an den Anfragenden übertragen, der gegebenenfalls die Zahlungsdaten nochmals innerhalb eines kurzen Zeitraums bestätigen muss. Das Infotainment-System aktiviert bei Annahme der Fahrt automatisch die Navigation bzw. ändert einen bestehenden Navigationsvorgang und schaltet den entsprechenden Screen auf.

Die Zahlungsdaten können aus der gewünschten Fahrstrecke, dem Umweg oder einer Kombination aus beiden ermittelt werden. Für die Vermittlung des Dienstes behält der Dienstanbieter eine Provision ein.

Der Fahrer ist bei diesem Vorschlag zu einem persönlichen Ziel unterwegs und erhält dynamisch eine Transport-Anfrage, wobei die Daten des Navigationssystems des Fahrers bzw. seine prädiktiven Streckendaten in die Auswahl der Anfrage einfließen. Der Fahrer und der Anfragende müssen sich vorab bei dem entsprechenden Dienst registrieren und z. B. ihre Kontaktdaten, Zahlungsinformationen (z. B. Kreditkartendaten, PayPal-Daten), Führerscheindaten, Fahrzeugdaten etc. angeben. Über ein aus dem Stand der Technik bereits bekanntes Bewertungssystem können Fahrer, Fahrzeuge und Mitfahrer zusätzlich bewertet werden.

Nachfolgend werden Ausführungsbeispiele der vorliegenden Erfindung unter Bezugnahme auf die beigefügten Zeichnungen beschrieben. Es zeigen:
- Figur 1: eine schematische Darstellung eines Ausführungsbeispiels eines erfindungsgemäßen Fortbewegungsmittels mit einem Ausführungsbeispiel einer erfindungsgemäßen Vorrichtung bei einer Ausführung eines erfindungsgemäßen Verfahrens zur Unterstützung eines Anwenders bei der Findung eines geeigneten Mitfahrers;
- Figur 2: eine schematische Darstellung eines Verlaufs einer vordefinierten Route eines Anwenders sowie eine Startposition und eine Zielposition eines potenziellen Mitfahrers und
- Figur 3: ein Flussdiagramm veranschaulichend Schritte eines Ausführungsbeispiels eines erfindungsgemäßen Verfahrens zur Unterstützung eines Anwenders bei der Findung eines geeigneten Mitfahrers.

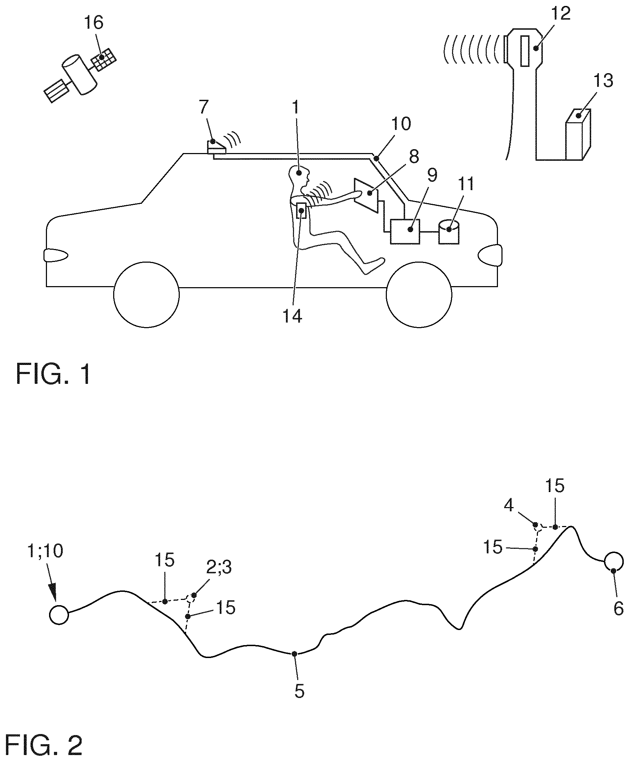

Figur 1 zeigt einen Pkw 10 als Fortbewegungsmittel, in welchen ein Anwender 1 eine erfindungsgemäße Vorrichtung umfassend einen Touchscreen 8, ein elektronisches Steuergerät 9 und einen informationstechnisch mit dem elektronischen Steuergerät 9 verbundenen Datenspeicher 11 aufweist. Der Touchscreen 8 dient der Eingabe und Ausgabe von Informationen, welche durch das elektronische Steuergerät 9 verarbeitet werden bzw. verarbeitet worden sind. Der Datenspeicher 11 ist eingerichtet, Instruktionen zur Ausführung eines erfindungsgemäßen Verfahrens sowie vordefinierte Referenzen bereitzuhalten. Informationstechnisch mit dem elektronischen Steuergerät 9 ist zudem eine Antenne 7 als Dateneingang verbunden, mittels dessen der Pkw 10 eine eigene Position ermitteln und Mitfahranfragen eines potenziellen (nicht dargestellten) Mitfahrers empfangen kann, welche mittels eines stationären Servers 13 mit den vordefinierten Referenzen des Anwenders 1 abgeglichen und gegebenenfalls mittels eines Sendemasten 12 an den Pkw 10 gesendet werden. Die Bestimmung der Ego-Position des Pkws 10 erfolgt mittels Satelliten 16 (lediglich einer dargestellt). Ein Smartphone 14 als Kommunikationsendgerät des Anwenders 1 ist alternativ oder zusätzlich eingerichtet, die verfahrensgemäßen Schritte auszuführen. Die Komponenten "Touchscreen", "Auswerteeinheit", "Datenspeicher" und "Antenne" sind derart ersichtlich essentielle Bestandteile eines modernen Smartphones 14, dass auf eine detaillierte Darstellung derselben verzichtet werden kann.

Figur 2 zeigt einen Verlauf einer vordefinierten Route 5 zwischen einem aktuellen Standort des Anwenders 1 bzw. eines Fortbewegungsmittels 10 und einer der vordefinierten Route 5 zugeordneten endgültigen Zielposition 6. An einer Startposition 3 befindet sich ein Mitfahrer 2, welcher an eine Zielposition 4 befördert werden möchte. Die von der Startposition 3 zur Zielposition führende Route verläuft überwiegend entlang der vordefinierten Route 5, welche der Anwender 1 ohnehin fahren möchte. Um den Mitfahrer 2 an der Startposition 3 abzuholen, muss der Anwender 1 einen Umweg 15 zur Startposition 3 fahren, wo er den Mitfahrer 2 abholt und anschließend über einen Teil der vordefinierten Route 5 und einen weiteren Umweg 15 zur Zielposition 4 gelangt. Dort setzt er den Mitfahrer 2 ab und fährt über einen weiteren Umweg 15 zurück zur vordefinierten Route 5 und schließlich zur endgültigen Zielposition 6.

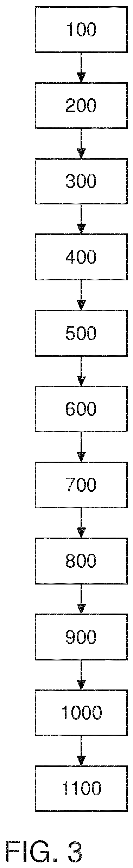

Figur 3 zeigt ein Flussdiagramm veranschaulichend Schritte eines Verfahrens zur Unterstützung eines Anwenders eines Fortbewegungsmittels bei der Findung eines geeigneten Mitfahrers. In Schritt 100 wird eine Mitfahranfrage umfassend eine Definition einer Startposition und eine Zielposition auf einem Server empfangen. Anschließend wird in Schritt 200 die Mitfahranfrage mit einer vordefinierten, prädizierten Route des Fortbewegungsmittels automatisch abgeglichen. Hierbei wird in Schritt 300 ein Umweg, welcher sich aufgrund der Startposition bezüglich der vordefinierten Route ergibt, bewertet. Zusätzlich wird in Schritt 400 ein Umweg bewertet, welcher sich aufgrund der Zielposition bezüglich der vordefinierten Route ergibt. In Schritt 500 wird automatisch anhand einer vordefinierten Referenz entschieden, ob die Mitfahranfrage dem Anwender unterbreitet wird oder nicht. Insofern die vordefinierte Referenz die Mitfahranfrage als für den Anwender interessant bewertet wird und der Anwender sich für die Annahme der Mitfahranfrage entscheidet, wird in Schritt 600 eine Annahme der Mitfahranfrage durch den Anwender (im Ansprechen auf eine Anwenderinteraktion oder automatisch) ermittelt und im Ansprechen darauf in Schritt 700 eine Routenberechnung zur Ermittlung der erforderlichen Reisezeit für die Strecke und eine Routenführung zur Startposition gestartet. In Schritt 800 wird eine Ankunft an der Startposition automatisch ermittelt und im Ansprechen darauf in Schritt 900 eine Routenberechnung von der Startposition zur Zielposition gestartet.

Diese Strecke fahren der Mitfahrer und der Anwender gemeinsam. In Schritt 1000 wird automatisch eine Ankunft an der Zielposition ermittelt und im Ansprechen darauf schließlich eine Routenberechnung zur Fortsetzung der vordefinierten Route bis zu einer endgültigen Zielposition in Schritt 1100 gestartet.

Die vorliegende Erfindung stellt eine ökonomischere und ökologischere Möglichkeit einer gemeinsamen Verwendung eines Fortbewegungsmittels als bisherige Fahrdienstservices (Uber, Gett etc.) dar.

### Bezugszeichenliste

- 1: Anwender
- 2: Mitfahrer
- 3: Startposition
- 4: Zielposition
- 5: vordefinierte Route
- 6: endgültige Zielposition (der vordefinierten Route)
- 7: Antenne
- 8: Touchscreen
- 9: elektronisches Steuergerät
- 10: Pkw
- 11: Datenspeicher
- 12: Sendemast
- 13: stationärer Server
- 14: Smartphone
- 15: Umweg
- 16: Satellit
- 100 - 1100: Verfahrensschritte

## Patentansprüche

1. Verfahren zur Unterstützung eines Anwenders (1) eines Fortbewegungsmittels (10) bei der Findung eines geeigneten Mitfahrers (2) umfassend die Schritte:
- Empfangen (100) einer Mitfahranfrage umfassend eine Definition einer Startposition (3) und einer Zielposition (4),
- automatisches Abgleichen (200) der Mitfahranfrage mit einer vordefinierten Route (5) des Fortbewegungsmittels (10) auf einer stationären Auswerteeinheit (13) vor einem Empfangen der Mitfahranfrage durch das Fortbewegungsmittel (10) und in Abhängigkeit eines Ergebnisses des Abgleiches
- automatisches Entscheiden (500) anhand einer durch den Anwender (1) auf der stationären Auswerteeinheit (13) vordefinierten Referenz, ob die Mitfahranfrage dem Anwender (1) unterbreitet wird, oder nicht, wobei, wenn die Referenz die Mitfahranfrage als für den Anwender (1) als uninteressant kategorisiert, die Mitfahranfrage nicht an das Fortbewegungsmittel (10) gesendet wird.

2. Verfahren nach Anspruch 1, wobei die vordefinierte Referenz eine Definition eines maximal vom Anwender (1) akzeptierten Umweges (15) umfasst.

3. Verfahren nach Anspruch 1 oder 2 weiter umfassend
- Bewerten (300) eines Umweges (15), welcher aufgrund der Startposition (3) bezüglich der vordefinierten Route (5) entsteht und/oder
- Bewerten (400) eines Umweges (15), welcher aufgrund der Zielposition (4) bezüglich der vordefinierten Route (5) entsteht.

4. Verfahren nach einem der vorstehenden Ansprüche weiter umfassend:
- Ermitteln (600) einer Annahme der Mitfahranfrage und im Ansprechen darauf
- Starten (700) einer Routenberechnung zur Startposition (3).

5. Verfahren nach einem der vorstehenden Ansprüche, wobei die Referenz in Abhängigkeit
- einer Länge der vordefinierten Route (5) und/oder
- eines Datums und/oder
- einer Tageszeit und/oder
- einer Besetzung des Fortbewegungsmittels (10) und/oder
- einer Fahrzeugkonfiguration und/oder
- einer Identität des Anwenders (1) des Fortbewegungsmittels (10) definiert ist.

6. Verfahren nach einem der vorstehenden Ansprüche weiter umfassend
- automatisches Ermitteln (800) einer Ankunft an der Startposition (3) und im Ansprechen darauf
- Starten (900) einer Routenberechnung von der Startposition (3) zur Zielposition (4).

7. Verfahren nach einem der vorstehenden Ansprüche weiter umfassend
- automatisches Ermitteln (1000) einer Ankunft an der Zielposition (4) und im Ansprechen darauf
- Starten (1100) einer Routenberechnung zur Fortsetzung der vordefinierten Route (5).

8. Verfahren nach einem der vorstehenden Ansprüche, wobei die Mitfahranfrage weiter einen Wunsch-Zeitpunkt zur Abfahrt an der Startposition (3) und/oder eine Kategorisierung der Person des Mitfahrers (2) umfasst.

9. Vorrichtung zur Unterstützung eines Anwenders (1) eines Fortbewegungsmittels (10) bei der Findung eines geeigneten Mitfahrers (2) umfassend:
- einen Dateneingang (12), und
- eine stationäre Auswerteeinheit (13), wobei
- der Dateneingang (12) eingerichtet ist, eine Mitfahranfrage umfassend eine Definition einer Startposition (3) und einer Zielposition (4) zu empfangen, und
- die Auswerteeinheit (13) eingerichtet ist,
- die Mitfahranfrage automatisch mit einer vordefinierten Route (5) des Fortbewegungsmittels (10) abzugleichen und in Abhängigkeit eines Ergebnisses des Abgleiches
- automatisch anhand einer durch den Anwender (1) vordefinierten Referenz zu entscheiden, ob dem Anwender (1) die Mitfahranfrage unterbreitet wird, oder nicht, und, wenn die Referenz die Mitfahranfrage als für den Anwender (1) uninteressant kategorisiert, die Mitfahranfrage nicht an das Fortbewegungsmittel (10) zu senden.

10. Vorrichtung nach Anspruch 9, welche eingerichtet ist, ein Verfahren nach einem der vorstehenden Ansprüche 1 bis 8 auszuführen.

11. Computerprogrammprodukt umfassend Instruktionen, welche, wenn sie auf einer programmierbaren Auswerteeinheit (9) einer Vorrichtung nach einem der Ansprüche 9 oder 10 ausgeführt werden, die Auswerteeinheit (9) veranlassen, die Schritte eines Verfahrens nach einem der vorstehenden Ansprüche 1 bis 8 auszuführen.

12. Signalfolge repräsentierend Instruktionen, welche, wenn sie auf einer programmierbaren Auswerteeinheit (9) einer Vorrichtung nach einem der Ansprüche 9 oder 10 ausgeführt werden, die Auswerteeinheit (9) veranlassen, die Schritte eines Verfahrens nach einem der vorstehenden Ansprüche 1 bis 8 auszuführen.

13. Fortbewegungsmittel umfassend eine Vorrichtung nach Anspruch 9 oder 10.

## Claims

1. Method for assisting a user (1) of a means of transport (10) in finding a suitable passenger (2), comprising the steps of:
- receiving (100) a ride request comprising a definition of a starting position (3) and of a target position (4),
- automatically comparing (200) the ride request with a predefined route (5) of the means of transport (10) on a stationary evaluation unit (13) before receiving the ride request by the means of transport (10) and, depending on a result of the comparison,
- automatically deciding (500) on the basis of a reference predefined by the user (1) on the stationary evaluation unit (13) whether the ride request is submitted to the user (1) or not, wherein if the reference categorizes the ride request as being of no interest to the user (1), the ride request is not sent to the means of transport (10).

2. Method according to claim 1, wherein the predefined reference comprises a definition of a maximum detour (15) accepted by the user (1).

3. Method according to claim 1 or 2, further comprising
- evaluating (300) a detour (15) which arises due to the starting position (3) with respect to the predefined route (5) and/or
- evaluating (400) a detour (15) which arises due to the target position (4) with respect to the predefined route (5).

4. Method according to any of the preceding claims, further comprising:
- determining (600) an acceptance of the ride request and, in response thereto,
- starting (700) a route calculation to the starting position (3).

5. Method according to any of the preceding claims, wherein the reference is defined depending on - a length of the predefined route (5) and/or
- a date and/or
- a time of day and/or
- an occupation of the means of transport (10) and/or
- a vehicle configuration and/or
- an identity of the user (1) of the means of transport (10).

6. Method according to any of the preceding claims, further comprising
- automatically determining (800) an arrival at the starting position (3) and, in response thereto,
- starting (900) a route calculation from the starting position (3) to the target position (4).

7. Method according to any of the preceding claims, further comprising
- automatically determining (1000) an arrival at the target position (4) and, in response thereto,
- starting (1100) a route calculation to continue the predefined route (5).

8. Method according to any of the preceding claims, wherein the ride request further comprises a desired time for departure from the starting position (3) and/or a categorization of the character of the passenger (2).

9. Device for assisting a user (1) of a means of transport (10) in finding a suitable passenger (2), comprising:
- a data input (12), and
- a stationary evaluation unit (13), wherein
- the data input (12) is configured to receive a ride request comprising a definition of a starting position (3) and of a target position (4), and
- the evaluation unit (13) is configured
- to automatically compare the ride request with a predefined route (5) of the means of transport (10) and, depending on a result of the comparison,
- to automatically decide on the basis of a reference predefined by the user (1) whether the ride request is submitted to the user (1) or not, and, if the reference categorizes the ride request as being of no interest to the user (1), not to send the ride request to the means of transport (10).

10. Device according to claim 9, which is configured to carry out a method according to any of the preceding claims 1 to 8.

11. Computer program product comprising instructions which, when carried out on a programmable evaluation unit (9) of a device according to one of claims 9 or 10, prompt the evaluation unit (9) to carry out the steps of a method according to any of the preceding claims 1 to 8.

12. Signal sequence representing instructions which, when carried out on a programmable evaluation unit (9) of a device according to one of claims 9 or 10, prompt the evaluation unit (9) to carry out the steps of a method according to any of the preceding claims 1 to 8.

13. Means of transport comprising a device according to claim 9 or 10.

## Revendications

1. Procédé permettant d'aider un utilisateur (1) d'un moyen de transport (10) à trouver un covoitureur (2) approprié, comprenant les étapes consistant à :
- recevoir (100) une demande de covoiturage comprenant une définition d'une position de départ (3) et d'une position d'arrivée (4),
- comparer automatiquement (200) la demande de covoiturage avec un itinéraire prédéfini (5) du moyen de transport (10) sur une unité de traitement (13) stationnaire avant une réception de la demande de covoiturage par le moyen de transport (10) et en fonction d'un résultat de la comparaison
- décider automatiquement (500), à l'aide d'une référence prédéfinie par l'utilisateur (1) sur l'unité de traitement (13) stationnaire, si la demande de covoiturage est présentée ou non à l'utilisateur (1), dans lequel, si la référence catégorise la demande de covoiturage comme étant sans intérêt pour l'utilisateur (1), la demande de covoiturage n'est pas envoyée au moyen de transport (10).

2. Procédé selon la revendication 1, dans lequel la référence prédéfinie comprend une définition d'un détour maximal (15) accepté par l'utilisateur (1).

3. Procédé selon la revendication 1 ou 2, comprenant en outre
- l'évaluation (300) d'un détour (15) qui se produit en raison de la position de départ (3) par rapport à l'itinéraire prédéfini (5) et/ou
- l'évaluation (400) d'un détour (15) qui se produit en raison de la position d'arrivée (4) par rapport à l'itinéraire prédéfini (5).

4. Procédé selon l'une des revendications précédentes, comprenant en outre :
- la détermination (600) d'une acceptation de la demande de covoiturage et, en réponse à celle-ci,
- le démarrage (700) d'un calcul d'itinéraire vers la position de départ (3).

5. Procédé selon l'une des revendications précédentes, dans lequel la référence est déterminée en fonction - d'une longueur de l'itinéraire prédéfini (5) et/ou
- d'une date et/ou
- d'une heure de la journée et/ou
- d'une occupation du moyen de transport (10) et/ou
- d'une configuration de véhicule et/ou
- d'une identité de l'utilisateur (1) du moyen de transport (10).

6. Procédé selon l'une des revendications précédentes, comprenant en outre
- la détermination automatique (800) d'une arrivée à la position de départ (3) et, en réponse à celle-ci,
- le démarrage (900) d'un calcul d'itinéraire de la position de départ (3) à la position d'arrivée (4).

7. Procédé selon l'une des revendications précédentes, comprenant en outre
- la détermination automatique (1000) d'une arrivée à la position d'arrivée (4) et, en réponse à celle-ci,
- le démarrage (1100) d'un calcul d'itinéraire pour poursuivre l'itinéraire prédéfini (5).

8. Procédé selon l'une des revendications précédentes, dans lequel la demande de covoiturage comprend en outre une heure souhaitée de départ de la position de départ (3) et/ou une catégorisation de la personne du covoitureur (2).

9. Dispositif permettant d'aider un utilisateur (1) d'un moyen de transport (10) à trouver un covoitureur (2) approprié, comprenant :
- une entrée de données (12), et
- une unité de traitement (13) stationnaire, dans lequel
- l'entrée de données (12) est configurée pour recevoir une demande de covoiturage comprenant une définition d'une position de départ (3) et d'une position d'arrivée (4), et
- l'unité de traitement (13) est configurée pour
- comparer automatiquement la demande de covoiturage avec un itinéraire prédéfini (5) du moyen de transport (10) et, en fonction d'un résultat de la comparaison,
- décider automatiquement, à l'aide d'une référence prédéfinie par l'utilisateur (1), si la demande de covoiturage est présentée ou non à l'utilisateur (1), et, si la référence catégorise la demande de covoiturage comme étant sans intérêt pour l'utilisateur (1), ne pas envoyer la demande de covoiturage au moyen de transport (10).

10. Dispositif selon la revendication 9, lequel est configuré pour exécuter un procédé selon l'une des revendications 1 à 8 précédentes.

11. Produit-programme informatique comprenant des instructions qui, lorsqu'elles sont exécutées sur une unité de traitement (9) programmable d'un dispositif selon l'une des revendications 9 ou 10, amènent l'unité de traitement (9) à exécuter les étapes d'un procédé selon l'une des revendications 1 à 8 précédentes.

12. Suite de signaux représentant des instructions qui, lorsqu'elles sont exécutées sur une unité de traitement (9) programmable d'un dispositif selon l'une des revendications 9 à 10, amènent l'unité de traitement (9) à exécuter les étapes d'un procédé selon l'une des revendications 1 à 8 précédentes.

13. Moyen de transport comprenant un dispositif selon la revendication 9 ou 10.
